# EUROPEAN PATENT APPLICATION

(11) **EP 0 537 019 A2**
(43) Date of publication of application: **14.04.1993**
(21) Application number: 92309218.3
(22) Date of filing: 09.10.1992
(51) Int. Cl.: B60N 2/28, C07C 251/44

(54) **Child safety arrangement**

(30) Priority: 09.10.1991 GB 9121410
(71) Applicant: GENERAL ENGINEERING (NETHERLANDS) B.V., NL-3508 AA Utrecht (NL)
(72) Inventor: Eksell, Erik Lennart, S-447 00 Vargarda (SE); Celsing, Gustaf Arnold Larsson, S-441 57 Alingsas (SE)
(74) Representative: Frankland, Nigel Howard

(57) **Abstract**

A child safety arrangement in a motor vehicle comprises, in combination, a seat (1) provided in the motor vehicle, the seat (1) being designed to accommodate an adult and a safety device (8, 30, 35) designed to accommodate a child. The seat (1) is associated with a plurality of anchoring points (5, 6, 7) and the safety device (8, 30, 35) is provided with a plurality of anchoring means (15, 16, 23, 31, 32, 33, 37, 38, 39) adapted to engage the anchoring points (5, 6, 7) associated with the seat. The arrangement is designed such that when the anchoring means (15, 16, 23, 31, 32, 33, 37, 38, 39) have engaged the anchoring points (5, 6, 7) the safety device (8, 30, 35) is mounted on the squab (2) of the seat (1) and the squab (2) of the seat (1) is at least partially compressed.

## Description

THE PRESENT INVENTION relates to a child safety arrangement and more particularly relates to an arrangement by which a safety device for a child, such as so-called child seat, a carry-cot or a booster cushion may be mounted in position in a motor vehicle.

Various safety devices are used for children in motor vehicles. The most common such safety device is a child seat which is a specially formed seat provided with its own safety harness, dimensioned to accommodate a young child. Such a safety seat must, of course, be mounted securely in position in the motor vehicle. Many different techniques are presently utilised to secure a safety seat in position.

Other safety devices that are used in motor vehicles include a booster cushion, used to enable an older child to wear, safely, an adult safety belt. The main purpose of the booster cushion is to elevate the child above the squab of a seat so that the child is at an appropriate height to be engaged by the shoulder strap of a conventional adult seat belt with lap and shoulder parts.

A further safety device that is sometimes used in a motor vehicle is a carry-cot, and straps or other fixings have to be provided to secure the carry-cot in position.

It has been found that in many cases it is difficult to mount and de-mount a safety device, such as the safety devices described above, swiftly. Also if a safety device is de-mounted and subsequently mounted, care must be take that all the appropriate fixings are inter-connected correctly, otherwise, in accident situations, the safety device could break loose, with possibly very dangerous consequences. Reports show that in many cases safety devices are incorrectly fitted.

The present invention thus seeks to provide a new fixing for a safety device, of the type generally described above, which will firstly ensure that when the safety device has been mounted in position it is properly mounted in position, and secondly will facilitate the rapid mounting and de-mounting of the safety device. The preferred embodiment of the invention is a fixing adapted especially for use with a rearwardly facing child seat.

According to this invention there is provided in combination, a seat provided in a motor vehicle adapted to accommodate an adult and a safety device adapted to accommodate a child, the seat being associated with a plurality of anchoring points and the safety device being provided with a plurality of anchoring means adapted to engage the anchoring points associated with the seat, the arrangement being such that when the anchoring means have engaged the anchoring points the safety device is mounted on the squab of the adult seat and the squab of the adult seat is at least partially compressed.

The invention also provides, in combination, a safety device for use by a child and a seat adapted for use by an adult in a motor vehicle, the safety device being mounted on the seat, the seat being associated with a plurality of anchoring points, and the safety device being provided with a plurality of anchoring means engaging the anchoring points, the squab of the adult seat being partially compressed by the safety device.

The anchoring points may be mounted on the seat, or on part of the vehicle adjacent the seat, such as the floor of the vehicle.

Advantageously at least one anchoring point associated with the seat is mounted in the vehicle in such a way that it is only useable when the seat is positioned sufficiently far rearwardly to be more than a predetermined distance from the vehicle dashboard.

Preferably the safety device comprises a child seat.

Alternatively the safety device may comprise a carry-cot or a booster cushion.

Conveniently each anchoring point is adjustably mounted in position and is adapted to be moved to a retracted position.

Advantageously each anchoring point comprises an apertured plate.

Preferably at least some of the anchoring means comprise double-cranked projections adapted to engage with the said apertured plates.

Conveniently one of the anchoring means comprises an element having, at the free end thereof, a head adapted to engage one of said anchoring points.

The element may be a rigid element, or may comprise a strap or the like.

Advantageously means are provided to place the element under tension.

In order that the invention may be more readily understood, and so that further features thereof may be appreciated, the invention will now be described, by way of example, with reference to the accompanying drawings in which
FIGURE 1 illustrates a main seat in a motor vehicle and a child safety device, in the form of a child seat, adapted to be mounted on the main seat,
FIGURE 2 is an enlarged view of part of the mounting mechanism for the child seat of Figure 1,
FIGURE 3 is a view illustrating the child seat of Figure 1 when in position on the adult seat,
FIGURE 4 is an enlarged view of one part of an anchorage for the child seat illustrated in Figure 3,
FIGURE 5 is a side view of the child seat of Figure 3 in position on the main seat in the motor vehicle,
FIGURE 6 illustrates an alternative form of safety device comprising a carry-cot adapted to be mounted on the seat of a motor vehicle,
FIGURE 7 illustrates a child safety device in the form of a booster cushion adapted to be mounted on the seat of a motor vehicle, and
FIGURE 8 illustrates the child seat of Figures 1 to 5 when mounted on a framework to form a push-chair.

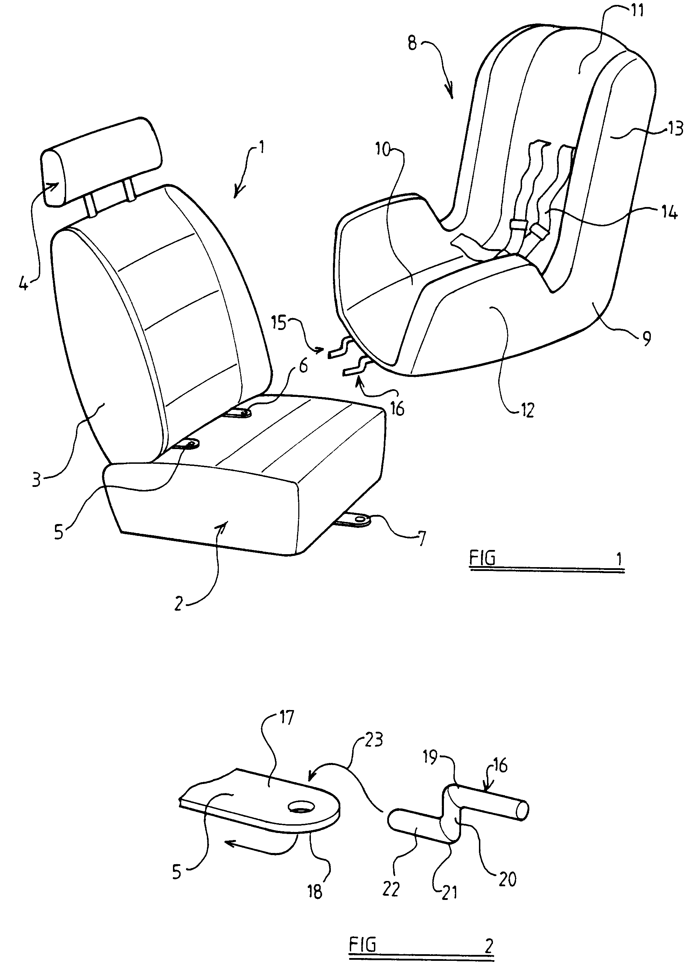

Referring initially to Figure 1 of the accompanying drawings a main or adult seat 1 is illustrated which is a conventional seat, intended for use by an adult, mounted within a motor vehicle. The adult seat 1 comprises a squab 2 which is upholstered, and which is provided with a certain degree of resilience. The adult seat is also provided with a back 3 and a head-rest 4, and is conventional. The adult seat may be mounted in position in the motor vehicle in any conventional way.

The adult seat is associated with three anchoring points 5,6,7 to enable a safety device to be mounted on the seat. The two anchoring points 5 and 6 are located in the region of the junction between the squab 2 and the back 3 of the seat. In this embodiment each of the anchoring points 5 and 6 comprises a forwardly directed plate having a centrally located aperture. The anchoring points may be located at the position shown, towards the centre of the back of the seat, or may be located at positions which are spaced further apart, adjacent the edges of the seat. In a further embodiment the anchoring points may be mounted on parts of the vehicle adjacent the seat, such as on the vehicle floor.

The third anchoring point 7 again comprises a forwardly directed apertured plate, and is located adjacent the base of the squab 2 of the adult seat at the front of the seat and in the centre. As with the anchoring points 5, 6, the anchoring point 7 may be mounted on the vehicle floor adjacent the base of squab 2. In further embodiments the anchoring points may have a different form to that described and may for example comprise buckle-and-tongue connections.

The various anchoring points 5, 6 and 7 illustrated in Figure 1 may be permanently mounted in position or the apertured plates or the like may be pivotally mounted in position, each plate preferably being adapted to pivot about a vertical axis. The axes of pivoting of the anchoring points 5,6 may be towards the rear of the squab 2 and the axis of pivoting of the anchoring point 7 may also be located beneath the squab, or on the floor. Thus simply by rotating the anchoring points in a horizontal plane they may be moved to a retracted position where they do not inconvenience an adult occupant of the seat. If alternative forms of anchoring point are used, as mentioned above, they may be mounted to be moved to a retracted or convenient inoperative position.

A child safety seat 8 is provided adapted to be mounted on the adult seat 1. The child safety seat 8 is of conventional design, comprising a shell 9 which defines a portion 10 upon which the child may sit and a back-rest 11. The child safety seat is provided with upwardly directed side portions 12 adjacent the sitting region 10 and forwardly directed wings 13 adjacent the back 11. The seat is provided with an integral harness 14. Many seats of this general design are presently available.

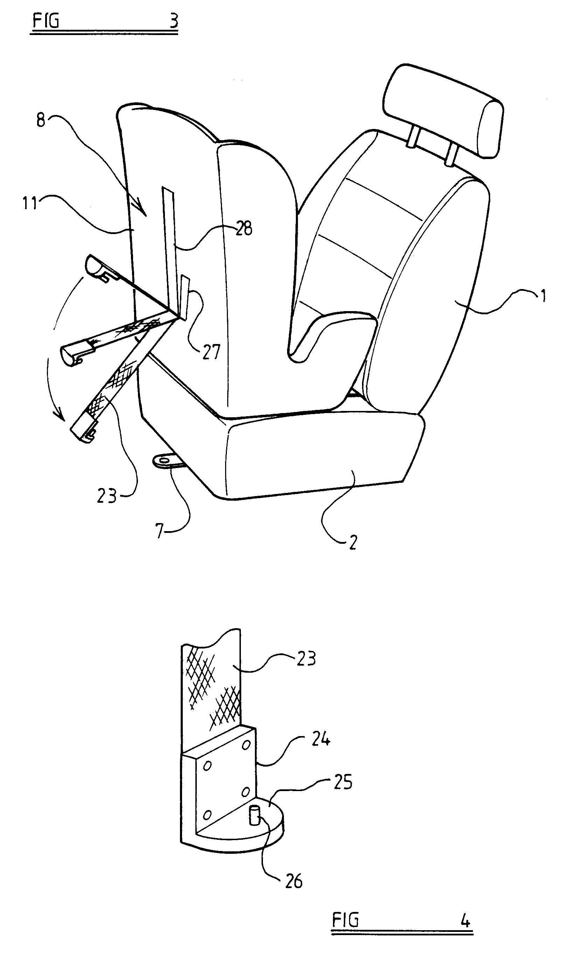

Located adjacent the front of the sitting portion of the child safety seat are two forwardly directed projections in the form of cranked arms 15,16 comprising anchoring means adapted to engage with the anchoring points 5,6. Thus the spacing between the cranked arms 15,16 is the same as the spacing between the anchoring points 5,6. Figure 2 illustrates one of the anchoring points 5 in greater detail, and clearly shows the forwardly directed plate 17 and the aperture 18. Figure 2 also illustrates the cranked arm 16. It is to be appreciated that each cranked arm, such as the cranked arm 16, is really provided with two cranks, the first 19 leading to a vertically downwardly extending portion 20 of the arm, the second crank 21 merging with a further forwardly extending portion 22.

It is to be appreciated that if the child safety seat 8 is manipulated appropriately the portion 22 may be inserted through the aperture 18, generally as indicated by the arrows 23, and then the child safety seat may be moved to a substantially horizontal position in which the portion 22 lies beneath the apertured plate 17, and the portion 20 extends vertically upwardly through the aperture 18, the main portion of the cranked arms 16 being located above the plate 17. It is to be appreciated that both the forwardly extending projections 15,16 may be engaged with the anchoring points 5,6 simultaneously, in the same way.

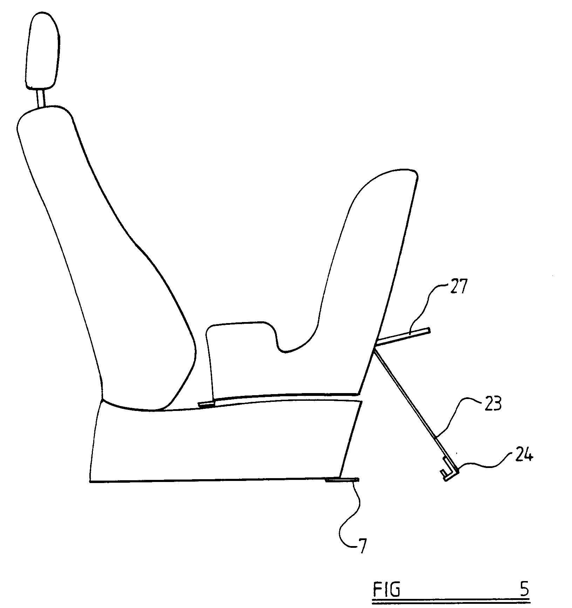

Referring now to Figure 3, the child safety seat 8 has been partly mounted upon the adult seat 1 by engaging the cranked arms 15,16 with the anchoring points 5,6. A further anchoring means in the form of an element 23 is provided which is connected to a point on the rear of the back 11 of the child safety seat 8. The free end of the element 23 carries a head 24 which incorporates a forwardly extending projection 25 carrying an upwardly extending pin 26. The pin 26 is dimensioned to be received in the aperture present in the anchoring point 7.

In the preferred embodiment the element 23 is a length of strap, as illustrated and described below. However, such a strap is only suitable for use where the child safety seat 8 engages the dashboard or some other support to the front of the safety seat 8 when it is in the operative position. If no such support is available the element 23 has to be a rigid element to absorb the downward load. The rigid element 23 will have one end pivotally connected to the child safety seat 8.

In the preferred embodiment of the invention as mentioned above, the length of the strap which comprises the element 23 is such that in order to engage the pin 26 with the aperture in the plate 7 the main shell of the child safety seat 8 must be pressed downwardly, at least partially compressing the squab 2 of the adult seat 1 to enable the projection 26 to be inserted into the aperture 7 from the underside. When the pressure applied to the child safety seat 8 is released, the child safety seat will move upwardly slightly under the bias applied by the compressed squab 2, and the strap 23 will then become tight. However, in this condition the squab 2 of the adult seat is still at least partially compressed.

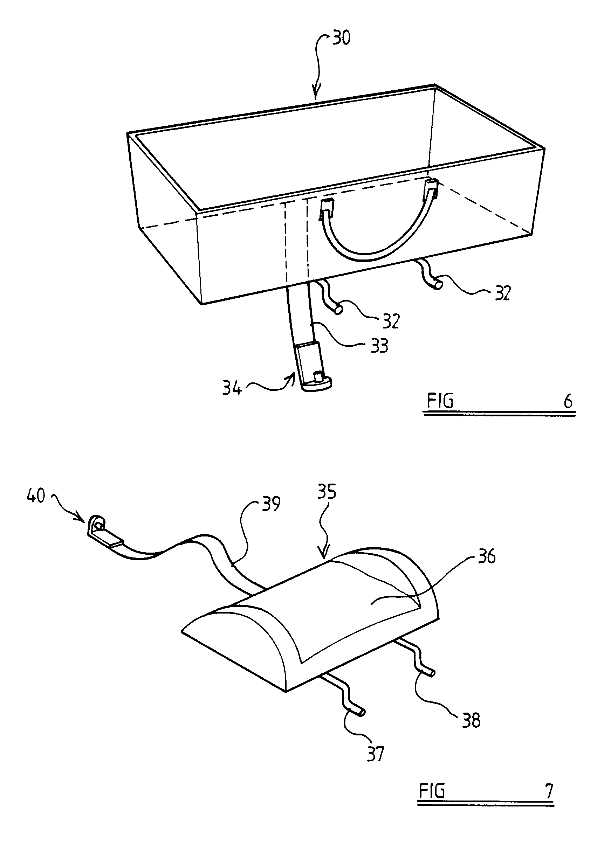

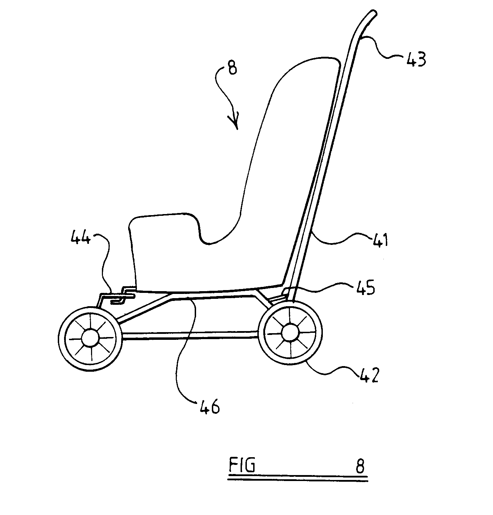

It is to be appreciated that if the child safety seat is not correctly connected to any one of the anchoring points, because the squab 2 is intended to be partially compressed, the child safety seat 8 will be biassed upwardly by the compressed squab, at least in the region where the child safety seat 8 is not connected to the appropriate anchoring point. Thus, either the back of the child safety seat 8 will be biassed upwardly, clearly showing that the pin 26 is not engaged with the aperture in the anchoring point 7, or one of the front corners of the child safety seat 8 will be biassed upwardly, showing that either the anchoring point 5 or the anchoring point 6 has not been properly engaged. Thus a person mounting the child safety seat 8 in position will immediately realise it when the child safety seat 8 has been mounted in position incorrectly, with the various anchoring means present on the child safety seat 8 have not correctly engaged the anchoring points present on the adult seat 1. In a modified embodiment of the invention, however, the strap 23 is of adjustable length and an operating handle 27 is provided which can be actuated to tension the strap 23. In use of this embodiment of the invention initially the head 24 at the end of the strap 23 is engaged with the anchoring point 7, and subsequently the handle 27 is operated to tighten the belt 23 so that the squab of the seat 2 is partially compressed. Such a handle 27 is shown in the operative position in Figure 5. If the element 23 is rigid a handle corresponding to the handle 27 may operate a mechanism which moves the point of connection between the element 23 and the seat. Thus the element 23 may be pivotally connected to a carriage which can be moved along a track by the handle.

The element 23, when not in use, may be received within a channel 28 provided for that purpose in the back of the child safety seat 8.

It is to be appreciated that the child safety seat 8 is illustrated as being mounted on the adult seat 1 in a "rearward" facing position. The child seat may be mounted in a forward facing condition simply by changing the location of the anchoring means provided on the seat or by using the conventional adult safety belt to retain the child seat in position.

Whilst the invention has been described thus far with reference to a child safety device in the form of a child safety seat 8 it is to be appreciated that the invention applies equally to other child safety devices, for example a carry-cot 30 as illustrated in Figure 6. One side of the carry-cot 30 is provided with projecting cranked anchoring means 31,32 corresponding to the projections 15,16 of the child seat of Figure 1, and the other side of the carry-cot 30 is provided with a further anchoring means comprising an element 33 having a head 34 corresponding to the head 24. The carry-cot 30 would be mounted in position in the same way as the child safety seat 8, by initially inter-connecting the anchoring means 31,32 with the anchoring points 5,6 and subsequently connecting the head 34 provided at the end of the strap 33 to the anchoring point 7. The element 33 will be of such a length that when the carry-cot 30 is mounted in position as described above the squab 2 of the adult seat 1 is partly compressed, or means may be provided to enable the element 33 to be tensioned to partly compress the squab 2.

Figure 7 illustrates another safety device which can be mounted on an adult seat in the manner described above, in the form of a booster cushion 35. The cushion provides a resilient upholstered pad 36 upon which a child may sit, the lower part of the pad being provided with projecting cranked anchoring means 37,38 adapted to engage the anchoring points 5,6, the other side of the booster cushion having an element 39 carrying a head 40 corresponding to the head 24, this head being adapted to engage the anchoring point 7. The element 39 will also be of an appropriate length, or will be associated with tensioning means, so that when the booster cushion is in position the squab 2 is partially compressed.

Where this invention is used in a motor vehicle provided with a passenger air bag safety device installed in the vehicle dashboard the child safety device must be spaced from the dashboard by a minimum predetermined distance in order to avoid the child being injured when the air bag is inflated in an accident situation. It is therefore envisaged that with a vehicle having a passenger air bag the third anchoring point 7 will be mounted in the vehicle in such a way that it is only useable when the passenger seat has been moved to a rearward position. By way of example the anchoring point 7 could be mounted on the vehicle floor at a position such that it is hidden beneath the seat until the seat is moved sufficiently to the rear whereupon the anchoring point is rendered accessible. The anchoring point could, alternatively, be mounted on the seat or a part associated with the seat with the aperture in the plate which forms the anchoring point normally being blocked to prevent its use, with the blockage being removed when the seat has been moved sufficiently to the rear. Thus, when mounting the child safety device upon the squab 2 of the seat it would be necessary to move the seat rearwardly before the anchoring means associated with the child safety device could be attached to the anchoring point 7. This would ensure that the child safety device is positioned sufficiently far away from the vehicle dashboard to reduce the risk of injury to the child should the air bag be inflated in an accident situation. It would not be possible to connect the anchoring means of the child safety device to the anchoring point 7 if the adult seat is positioned too far forward.

The child seat 8 illustrated in Figures 1 to 4 may, if desired, be mounted upon an appropriate framework 41, as shown in Figure 8, the framework being provided with wheels 42 and a handle 43 so that the combination of the framework and the child seat forms a child's push-chair. The framework 41 provides portions 44 which are located to engage with cranked arms 15,16 provided at the front of the seat and is also provided with a further anchoring point 45 adapted to engage with the head 24 provided at the end of the element 23. Part of the framework forms a resilient arched support 46 adapted to engage the under-surface of the sitting portion 10 of the seat 8.

In each embodiment described above the head provided on the element which is used to co-operate with the third anchoring point 7 may be replaced by a buckle-and-tongue connection. Also the other anchoring points may be replaced by buckle-and-tongue connections.

It is to be understood that while the invention has been described with reference to embodiments having three anchoring points, other embodiments of the invention may have two anchoring points (located, for example, at the front and the rear of the seat to accommodate an adult, on the centre line of the seat) or may have four or more anchoring points.

The features disclosed in the foregoing description, in the following claims and/or in the accompanying drawings may, both separately and in any combination thereof, be material for realising the invention in diverse forms thereof.

## Claims

1. In combination, a seat (1) provided in a motor vehicle adapted to accommodate an adult and a safety device (8, 30, 35) adapted to accommodate a child, the seat (1) being associated with a plurality of anchoring points (5, 6, 7) and the safety device (8, 30, 35) being provided with a plurality of anchoring means (15, 16, 23, 31, 32, 33, 37, 38, 39) adapted to engage the anchoring points (5, 6, 7) associated with the seat (1), characterised in that when the anchoring means (15, 16, 23, 31, 32, 33, 37, 38, 39) have engaged the anchoring points (5, 6, 7) the safety device (8, 30, 35) is mounted on the squab (2) of the adult seat (1) and the squab (2) of the adult seat (1) is at least partially compressed.

2. In combination a safety device (8, 30, 35) for use by a child and a seat (1) adapted for use by an adult in a motor vehicle, the safety device (8, 30, 35) being mounted on the seat, the seat being associated with a plurality of anchoring points (5, 6, 7), and the safety device (8, 30, 35) being provided with a plurality of anchoring means (15, 16, 23, 31, 32, 33, 37, 38, 39) engaging the anchoring points (5, 6, 7), characterised in that the squab (2) of the adult seat (1) is partially compressed by the safety device (8, 30, 35).

3. A combination according to Claim 1 or Claim 2 wherein at least one anchoring point (7) associated with the seat (1) is mounted in the vehicle in such a way that it is only useable when the seat (1) is positioned sufficiently far rearwardly to be more than a predetermined distance from the vehicle dashboard.

4. A combination according to any one of Claims 1 to 3 wherein each anchoring point (5, 6, 7) is adjustably mounted in position and is adapted to be moved to a retracted position.

5. A combination according to any one of the preceding Claims wherein each anchoring point (5, 6, 7) comprises an apertured plate (17).

6. A combination according to Claim 5 wherein at least some of the anchoring means comprise double-cranked projections (15, 16) adapted to engage with the said apertured plates (17).

7. A combination according to any one of Claims 1 to 6 wherein one of the anchoring means comprises an element (23) having, at the free end thereof, a head (24) adapted to engage one of said anchoring points (5, 6, 7).

8. A combination according to Claim 7 wherein the element is a rigid element.

9. A combination according to Claim 7 wherein the element is a strap (23).

10. A combination according to Claims 7, 8 or 9 wherein means (27) are provided to place the element (23) under tension.
